(19) **Europäisches Patentamt / European Patent Office / Office européen des brevets**

(11) **EP 2 343 517 B1**

(12) **EUROPEAN PATENT SPECIFICATION**

(45) Date of publication and mention
of the grant of the patent:
**27.03.2013 Bulletin 2013/13**

(51) Int Cl.:
*G01F 5/00* (2006.01)     *G01F 25/00* (2006.01)

(21) Application number: **10000071.0**

(22) Date of filing: **07.01.2010**

(54) **Method for calibrating a flow sensor**

Verfahren zur Eichung eines Durchflusssensors

Procédé pour l'étalonnage d'un capteur de flux

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**13.07.2011 Bulletin 2011/28**

(73) Proprietor: **Sensirion AG**
**8712 Stäfa (CH)**

(72) Inventors:
• **Mayer, Felix**
**8712 stäfa (CH)**

• **Hornung, Mark**
**8712Stäfa (CH)**
• **Wehrli, Samuel**
**8049 Zürich (CH)**
• **Graf, Davy**
**8048 zürich (CH)**

(74) Representative: **Toleti, Martin**
**c/o E.Blum & Co. AG**
**Vorderberg 11**
**8044 Zürich (CH)**

(56) References cited:
**EP-A1- 0 834 723     WO-A2-2004/088256**
**US-A- 3 492 856**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present disclosure refers to a method for calibrating a flow sensor.

Background Art

Flow sensors may be used for measuring flows of any fluid such as liquids or gases. Prior to any use of such flow sensor in its operating environment the sensor needs to be calibrated in order to allow a measured sensor output to be associated with a certain flow.

While a calibration routine may typically involve receiving the sensor output for different predetermined flows supplied to the flow sensor arrangement there might be applications where it may not be desired to run the calibration routine entirely with the target fluid for the reason that the target fluid may be difficult to handle, may be expensive, or may be a hazardous or toxic substance. Or, it may not be desired to calibrate under real world conditions because the quantities of the target fluid expected to pass the flow sensor arrangement in operation are too large to be provided for use in an offline calibration routine. In other applications, both concerns may apply simultaneously.

In WO 2004/088256 A2, a method is disclosed of obtaining at least one representation of a characteristic function of a sensor from a test fluid during calibration of the sensor according to a sensor model having a transfer function operating on flow rate, at least one sensor property and at least one fluid property. The at least one representation of the characteristic function is employed to determine flow rates through the sensor during operating with an arbitrary fluid.

According to EP 0 834 723 A1, a flowmeter used in a manufacturing process with toxic and reactive process fluids comprises a fluid flow sensor which senses fluid flow. A set point is established based upon predetermined temperature and pressure conditions at which the fluid will be utilized in the process. A valve drive operates a fluid flow valve to the resulting fluid flow rate, this being based upon the sensed flow rate and the set point. A control unit controls the valve drive. The control unit accesses a calibration data set to determine the amount of fluid to be delivered by the fluid flow valve based upon the sensed flow rate and the set point. This calibration data set is created for the controller over its operational range using a calibration fluid having similar thermodynamic transport properties to a process fluid. The instrument is calibrated using the calibration fluid and the data set is produced by converting the calibration data using process fluid data stored in a data base. Accessing the data set stored in the instrument together with routing signals over a communication network permits the instrument to precisely control process fluids without having to introduce external correction factors or other adjustments to the process.

In US 3,492,856 A, a piston is adapted to move as a fluid barrier through a conduit connected in series with a flowmeter under test. The piston is mechanically coupled to a displacement indicator by a cable or a rod that can also serve to open and close a passage through the piston. When the passage through the piston is closed, the piston moves through the conduit in synchronism with fluid flow. A stop, located at the downstream end of the conduit, is adapted to open the passage as the piston engages it.

Summary of the Invention

It is an object of the present invention to provide a method for calibrating a flow sensor, which does not need a large quantity of a target fluid to be supplied during a calibration routine of the flow sensor.

This problem is solved by a method for calibrating a flow sensor according to the features of claim 1.

An underlying arrangement of elements is as follows: The flow sensor arrangement includes a main path for allowing the target fluid to flow through, and a bypass for bypassing the main path. The flow sensor is arranged at the bypass. By such arrangement, flows at lower scale can be used for calibration purposes, and there is no need to arrange the flow sensor in the main path which may be difficult or undesired to achieve in some applications.

According to the invention there is provided a method for calibrating the flow sensor wherein the flow sensor is exposed to a reference fluid during some of the calibration steps. A sensor output is measured in the following scenarios: In a first scenario, a known flow of the reference fluid is supplied to the bypass only. Such supply may, for example, be achieved by sealing the main path in case of non-separable main path and bypass, or be achieved by detaching the bypass from the main path and loading the bypass with the reference fluid in isolation from the main path provided the bypass is separable from the main path. In a second scenario, a known flow of the reference fluid is supplied to the main path and the bypass in combination. In such scenario, the main path is not sealed nor removed from the bypass such that both the main path and the bypass are receptive for a known flow of the reference fluid to flow through. A first sensor output is received from applying the first measurement scenario for at least one known flow of the reference fluid. A second sensor output is received from applying the second measurement scenario for at least one known flow of the reference fluid.

This allows to determine a ratio between flows through the bypass only and the bypass and the main path in combination.

Advantageously, the sensor output is measured for multiple different known flows of the reference fluid supplied to the flow sensor arrangement in both of the scenarios such that a full characteristic between sensor output and flow applied can be received.

In a third scenario, the sensor output is measured when the bypass of the sensor arrangement is supplied with a known flow of the target fluid. Again, such flow through the bypass only may, for example, be achieved by sealing the main path in case of non-separable main path and bypass, or be achieved by detaching the bypass from the main path and loading the bypass with the reference fluid in isolation from the main path provided the bypass is separable from the main path. Such measurement provides for a third sensor output. Advantageously, the third sensor output is measured for multiple different known flows of the target fluid supplied to the bypass of the flow sensor arrangement.

By suitably putting the three sensor outputs into relation, a target sensor output can be determined. The target sensor output reflects the sensor output as a function of the total flow of the target fluid, i.e. the flow through the main path and the bypass. Such target sensor output can be determined subject to the received three sensor outputs. As a result, the method provides for a way to calibrate a flow sensor without exposing the main path of the flow sensor arrangement to a large quantity of the target fluid, and without the need to arrange the flow sensor in the main path of the flow sensor arrangement. Still, in operation a flow of the total target fluid can be determined simply by measuring the flow of the target fluid in the bypass.

It is noted that the three measurements do not imply a certain order in being implemented during calibration. Each measurement can be implemented at a time suitable before or after one of the other measurements.

According to another aspect (not claimed) there is provided a flow sensor arrangement with a main path, a bypass, and a flow sensor being arranged at the bypass, which flow sensor arrangement comprises a removable plug for sealing the main path when needed during calibration. This allows for implementing a calibration routine as introduced.

Other advantageous embodiments of the present invention are listed in the dependent claims.

Brief Description of the Drawings

Embodiments of the present invention will be better understood from the following detailed description in combination with the annexed drawings wherein the figures show:

Fig. 1: a perspective view of a flow sensor arrangement as used in a method according to an embodiment of the present invention,
Fig. 2: the flow sensor arrangement of Fig. 1 including a flow sensor attached,
Fig. 3: the flow sensor arrangement of Fig. 1 from a different perspective,
Fig. 4: the flow sensor arrangement of Fig. 1 in a cross-sectional view,
Fig. 5: the flow sensor arrangement of Fig. 4 including a plug,
Fig. 6: a flow sensor arrangement as used in a method according to another embodiment of the present invention, in a cross-sectional view,
Fig. 7: two graphs illustrating the sensor output in different scenarios according to an embodiment of the present invention, and
Fig. 8: two graphs illustrating the sensor output in different scenarios according to an embodiment of the present invention.

Detailed Description of the Invention

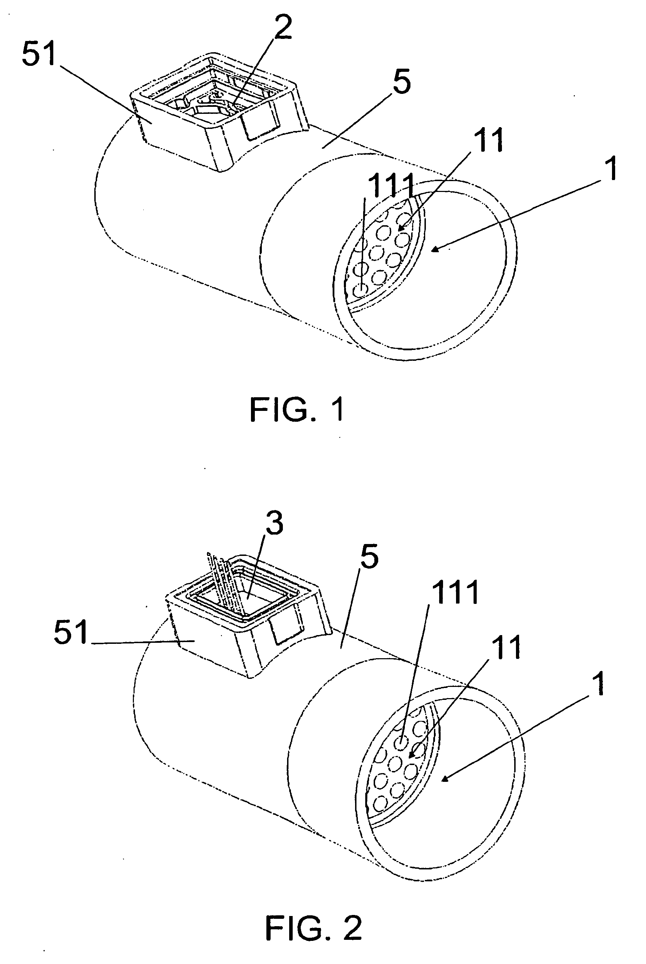

Figure 1 illustrates a perspective view of a flow sensor arrangement as used in a method according to an embodiment of the present invention. The flow sensor arrangement is built from a common component 5, advantageously manufactured as injection moulded component. The flow sensor arrangement basically has cylindrical shape. A main path 1 for a fluid to flow through is arranged along the longitudinal axis of the cylindrical common component 5. The fluid to flow through the flow sensor arrangement will be supplied to an opening of the common component 5 as can be seen in Figure 1. For this reason, the common component 5 may be attached to a supply pipe not shown in Figure 1. The main path 1 is not necessarily implemented as a hollow container of the common component 5. Instead, the main path may be built from multiple pipes 111 of small diameter according to the present embodiment. This arrangement of pipes 111 may again be manufactured by injection moulding. Especially, in such arrangement the pipes 111 serve as a main path 1 while at the same time the permanent structures between the pipes 111 form a flow resistance 11 for the fluid. The provision of the flow resistance 11 is beneficial as it allows for a sufficient and well-defined branching of the fluid into a bypass 2. Other designs of the flow resistance 11 and the main pass 1 may be possible both in terms of profile and arrangement. The design may preferably be guided by the function of the flow resistance 11 to generate a pressure drop and allow a defined branching of the fluid into the bypass, and the function of the main pass 1 to allow a sufficient flow of fluid to pass during operation.

The common component 5 comprises an extension 51 of basically rectangular shape integrally manufactured with the body of the main path 1 by injection moulding. The extension 51 is designed for holding a flow sensor not shown in Figure 1. The bypass 2 is arranged in the extension 51. The bypass 2 basically has the shape of a relatively short and thin duct. The bypass 2 is arranged for bypassing a section of the main path 1.

Figure 2 shows the flow sensor arrangement of Figure 1, however, now including a flow sensor 3 being attached to the common component 5. The flow sensor 3 can, for example, be glued or clicked to / into the common component 5. The flow sensor 3 is advantageously a thermal flow sensor measuring a signal indicative of the mass flow of the fluid. An example of such flow sensor is described in EP 1 840 535 A1. The flow sensor 3 has pins for electrically connecting the flow sensor 3 to the outside world. The flow sensor 3 is arranged such that a sensitive measuring element is exposed to the bypass 2 which measuring element directly or indirectly measures a physical parameter representative of the flow of a fluid through the bypass 2. Besides such measuring element, an advantageous embodiment of the flow sensor 3 may comprise an integrated circuit for processing the measured signals and, for example, convert and/or compute these into signals representing the flow, amplify such signals, or do some other pre-processing steps. In an advantageous embodiment of the present invention, the sensor signal provided at the pins of the flow sensor 3 is representative of the sensor output used in the calibration routine. In another embodiment, the sensor output used for the calibration routine may be tapped from somewhere internally in the flow sensor 3. In such embodiment, the calibration routine may be implemented on-chip, i.e. implemented in a circuit integrated on a semiconductor chip that holds the measuring element, too, and that is generically denoted as flow sensor 3 in the figures. Alternatively, the flow sensor 3 may provide the sensor output at its pins, and the calibration routine may be run external to the flow sensor 3 in some electronic control unit attached to the pins of the flow sensor 3.

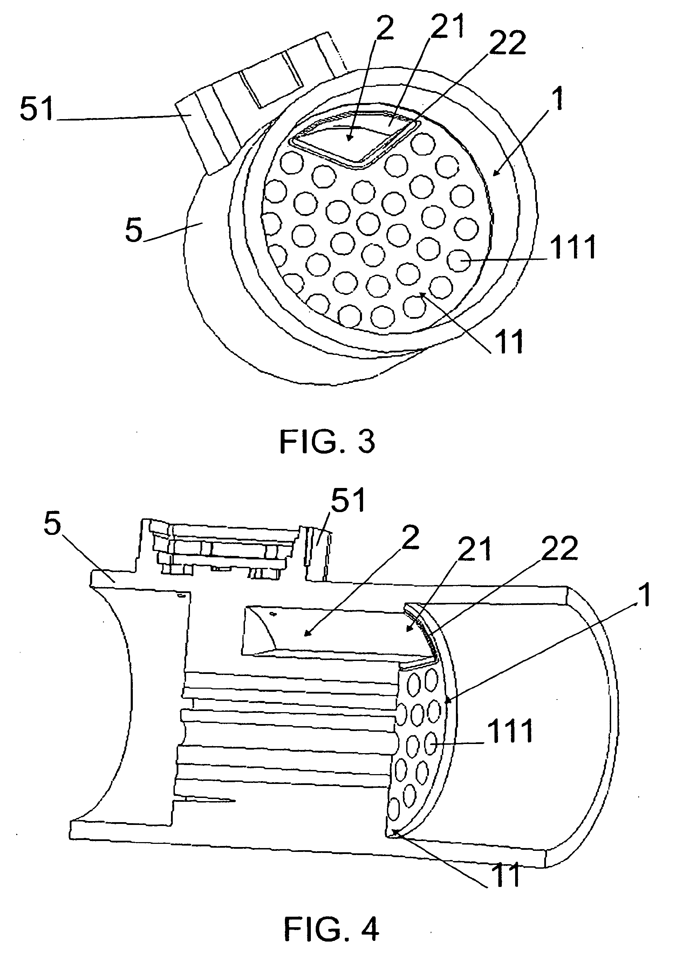

Figure 3 shows the flow sensor of Figure 1 from a different perspective, and especially allows a view onto the flow resistance 11, the multitude of circular shaped pipes 111 building the main path 1, and an inlet 21 of the bypass 2. The inlet 21 of the bypass 2 is of larger cross-section than the cross-section of an individual pipe 111 of the main path 1, however, of much smaller cross-section than a combination of the cross-sections of all the pipes 111. In the present embodiment, the inlet 21 of the bypass 2 and at least a first section of the bypass 2 following its inlet 21 are aligned in parallel to the pipes 111 of the main path 1, and, as a consequence, are aligned in parallel to the longitudinal axis of the common component 5.

Figure 4, which represents a cross-sectional view of the flow sensor arrangement of Figure 1, illustrates the course of the bypass 2 which extends parallel to the pipes 111 into the common component 5, however, by means of a small hole at its inner perimeter and continues perpendicular into the extension 51, where it is guided again in parallel to the main path as shown in Figure 1. Finally, the bypass 2 turns and enters the main path 1 as a small hole at its inner perimeter.

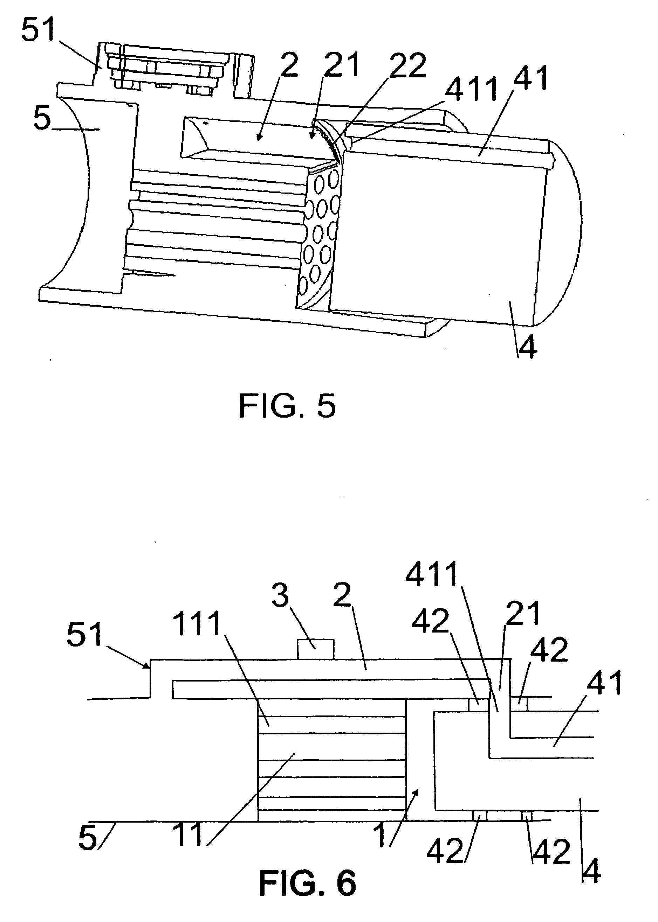

At the inlet 21 of the bypass 2 there is arranged a seal 22 in form of a sealing lip surrounding the inlet 21. This seal 22 is for sealing the bypass 2 against the main path 1 when a removable plug 4 is introduced into the flow sensor arrangement as illustrated in Figure 5. The plug 4 is designed for sealing the main path 1 against the bypass 2 in order to enable measurements used in the calibration routine where a flow exclusively supplied to the bypass 2 is measured.

The plug 4 preferably shows the same cylindrical shape as the common component 5 such that the plug 4 fits into an inlet of the common component 5. In the embodiment shown in Figure 5, the plug includes a supply 41 in form of a small pipe. An outlet 411 of the pipe 41 corresponds to the inlet 21 of the bypass 2 such that a fluid provided to an entry of the supply 41 of plug 4 may flow through the supply 41 into the bypass 2. In order to ensure such alignment the common component 5 and the plug 4 may advantageously provide a guide, for example in form of a bar/groove combination which allows for an insertion of the plug 4 into the common component 5 only such that the outlet 411 of the plug 4 meets the inlet 21 of the bypass.

The seal 22 may be arranged directly on the surface of the flow resistance 11 as such surrounding the inlet 21 of the bypass 2. Or, in an alternative embodiment, it may be arranged on a prominent rim surrounding the inlet 21 of the bypass 2 such that any leakage from the interface between the plug 4 and the bypass 2 into the main path 1 may even better be prevented. Alternatively, a seal or a combination of a seal and a rim may be arranged at the plug 4 for serving the same purpose.

Figure 6 shows another embodiment of a flow sensor arrangement in a cross-sectional view. While the basic set-up of the common component 5 including its extension 51, the pipes structure of the main path 1, the flow resistance 11, the arrangement of the flow sensor 3 in the bypass 2, and the removable plug 4 for sealing the main path 1 is equivalent to the flow sensor arrangement of Figures 1 to 5, the interface between a supply 41 in the plug 4 and an inlet 21 of the bypass 2 is now realized in a different manner: First, the inlet 21 of the bypass 2 extends perpendicular to the longitudinal axis of the common component 5. This requires a different arrangement of the outlet 411 of the supply 41 in plug 4, too, in order to make the outlet 411 of the plug 4 meet the inlet 21 of the bypass 2.

Here, the supply 41 in plug 4 first extends in parallel to the longitudinal axis of the common component 5, before it turns by 90 degrees in order to build a perpendicular outlet 41 at the perimeter of the plug 4 in order to correspond with the inlet 21 of the bypass 2. As a means for sealing the bypass 2 against the main path 1, two sealing rings 42 are arranged at the perimeter of the plug 4. Advantageously, the distance between the sealing rings 42 is not less than the diameter of the inlet 21 of the bypass 2. Again, the common component 5 and the plug 4 may advantageously provide a guide, for example in form of a bar/groove combination which allows for an insertion of the plug 4 into the common component 5 only such that the outlet 411 of the plug 4 and the inlet 21 of the bypass 2 meet in order to allow for a fluid to completely pour from the supply 41 into the bypass 2.

The plug 4 may be inserted into the common component 5 against a frictional force between the sealing rings 42 and the common component 5. The flow resistance 11 may serve as a stopper for the plug 4 such that a position where the stopper prevents the plug 4 from being further inserted, the outlet 411 of the plug 4 meets the inlet 21 of the bypass 2. In such scenario, a distance between the inlet 21 of the bypass 2 and the front end of the main path 1 may be a suitable distance for arranging the outlet of the supply 41 from the end of the plug 4.

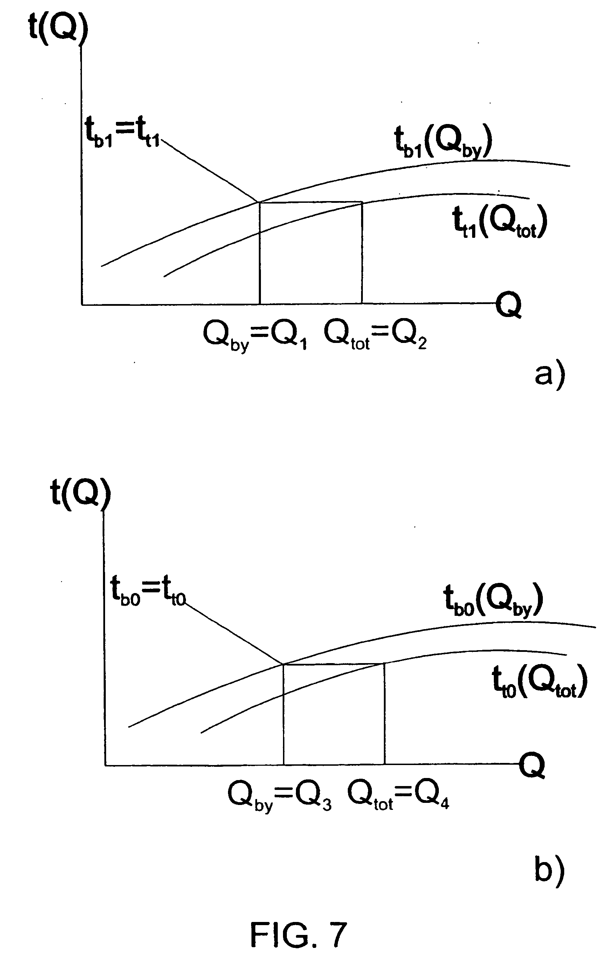

Figure 7 depicts two graphs illustrating the sensor output of a flow sensor arrangement in different scenarios according to an embodiment of the present invention. Figure 7a) shows two graphs t(Q) over Q in a single diagram with Q denoting a flow, and t(Q) denoting a sensor output subject to the flow Q. This holds for the graph in Figure 7b), too.

A first graph in Figure 7a) represents a first sensor output $t_{b1}$ ($Q_{by}$) in a first measurement scenario in which a reference fluid is supplied to the flow sensor arrangement, and in which the main path is being sealed such that all the fluid supplied passes the bypass and consequently the flow sensor located in the bypass. In the subject notation, for the sensor output t the indices "b" and "1" denote the scenario "flow through bypass only" and "reference fluid" respectively. For the flow Q, the index "by" denotes that the flow is a bypass-flow only.

The second graph in Figure 7a) illustrates a second sensor output $t_{t1}$ ($Q_{tot}$) in a second measurement scenario in which a reference fluid is supplied to the flow sensor arrangement, and in which the main path is being unsealed such that all the fluid supplied splits between the bypass and the main path. In the subject notation, for the sensor output t the indices "t" and "1" denote the scenario "total flow through bypass and main path" and "reference fluid" respectively. For the flow Q, the index "tot" denotes that the flow is a bypass-flow and a main path flow in combination.

In both scenarios, the received sensor outputs $t_{b1}$ ($Q_{by}$) and $t_{t1}$ $Q_{tot}$ are advantageously recorded in a suitable memory. In the different scenarios, the sensor outputs $t_{b1}$ ($Q_{by}$) and $t_{t1}$ ($Q_{tot}$) are received by applying the flow sensor arrangement with a known flow $Q_{by}$ and $Q_{tot}$ respectively which flows $Q_{by}$ and $Q_{tot}$ are varied. A person skilled in the art will choose a suitable number of different flows for generating a sensor output characteristic with sufficient samples. It is apparent from the diagram in Figure 7a) that for a given flow Q the sensor output $t_{b1}$ ($Q_{by}$) exceeds the sensor output $t_{t1}$ ($Q_{tot}$) for the reason that due to the arrangement of the flow sensor in the bypass the sensor output $t_{b1}$ ($Q_{by}$) is stronger when all the fluid flows through the bypass 2 only compared to the sensor output $t_{t1}$ ($Q_{tot}$) where only a small portion of the total fluid supplied passes the flow sensor 3 while a larger portion flows through the main path 1.

The sensor outputs $t_{b1}$ ($Q_{by}$), $t_{t1}$ ($Q_{tot}$) for both scenarios are put into relation to each other. As indicated in Figure 7a), a first flow $Q_1$ in the first scenario, i.e. $Q_{by}=Q_1$, results in a first sensor output $t_{b1}$ ($Q_{by}=Q_1$) - in short $t_{b1}$. In the second scenario, the same sensor output $t_{t1}$ ($Q_{tot}=Q_2$) = $t_{b1}$ ($Q_{by}=Q_1$) will be achieved when the flow sensor arrangement will be supplied with a second flow $Q_2$.i.e. $Q_{tot}=Q_2$. This means, that for a specific sensor output $t_{b1}=t_{t1}$ being equivalent in both scenarios, a ratio $r_1$ can be calculated between the flows $Q_{by}$ and $Q_{tot}$ that result in these specific sensor outputs $t_{b1}=t_{t1}$.

In a mathematical approach, the ratio $r_1$ can be characterized as

$$r_1 = Q_{tot} / Q_{by} \qquad\qquad (1)$$

for sensor outputs being equivalent to each other in both scenarios, which means:

$$t_{b1}(Q_{by}) = t_{t1}(Q_{tot}) \qquad\qquad (2)$$

Solving this equation towards $Q_{by}$ results in

$$Q_{by} = t^{-1}{}_{b1} [ t_{t1}(Q_{tot}) ] \qquad\qquad (3)$$

which right hand term can replace the term $Q_{by}$ in equation (1) such that the ratio $r_1$ can be rephrased:

$$r_1(Q_{tot}) = Q_{tot}/\{t^{-1}_{b1}[t_{t1}(Q_{tot})]\} \qquad (4)$$

The ratio $r_1(Q_{tot})$ denotes a relationship between flows of different scenarios - at sealed and unsealed main path - resulting in the same sensor outputs for the same fluid applied.

In most of the cases, this ratio will not represent a linear relationship over all Q but will be varying over.

For the reason that the ratio $r_1(Q_{tot})$ represents scenarios using a fluid different than the target fluid, an adjustment term will advantageously be applied for accounting for the divergence from the target fluid.

An adjusted ratio $r_0(Q_{tot})$ is derived from the ratio $r_1(c*Q_{tot})$ by way of:

$$r_0(Q_{tot}) = r_1(c*Q_{tot}) \qquad (5)$$

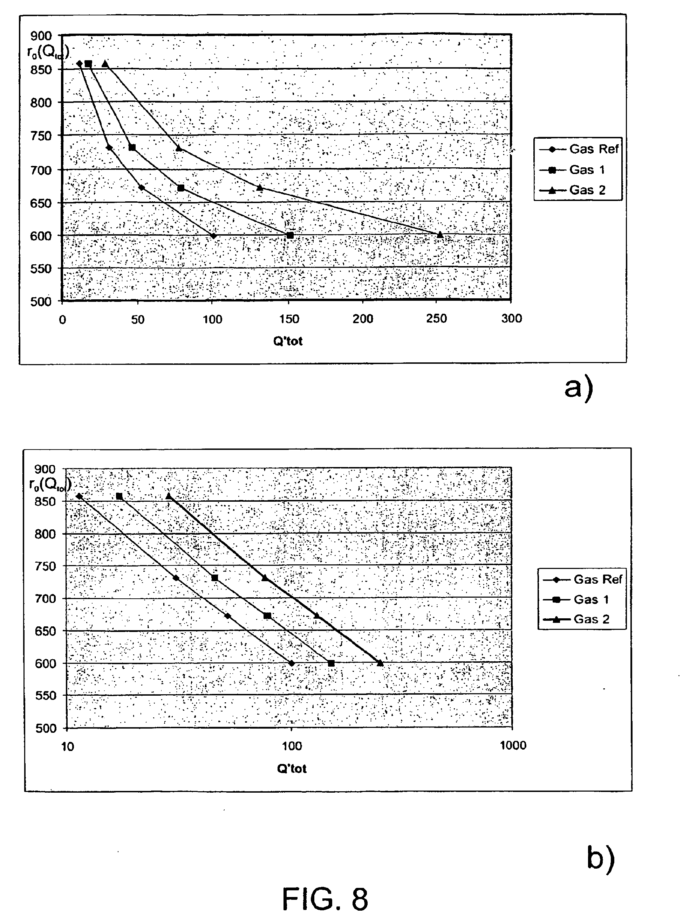

wherein c is a constant. Constant c depends on the density and viscosity of the fluid used as reference and target fluid. It can be determined by characterizing reference flow sensors with different fluids. Figure 8 illustrates sample ratios $r_0(Q_{tot})$ over Qtot between different gaseous fluids denoted as "Gas Ref", "Gas 1" and "Gas 2". Figure 8a) illustrates such ratios $r_0(Q_{tot})$ at linear scales of $r_0$ and $Q_{tot}$ while Figure 8b) illustrates the same ratios $r_0(Q_{tot})$ at logarithmic scales of $r_0$ and $Q_{tot}$. As can be seen from Figure 9b), the curves are substantially parallel and therefore the ratios differ by a multiplicative factor in Q.

In a final step, the characteristic of the target sensor output $t_{t0}(Q_{tot})$ is determined. The target sensor output $t_{t0}(Q_{tot})$ is the sensor output at unsealed main path under supply of the target fluid. In order to determine the target sensor output $t_{t0}(Q_{tot})$, a third sensor output $t_{b0}(Q_{by})$ at sealed main path under supply of the target fluid is received, again advantageously for different known flows.

Following the above considerations of determining flows which result in same sensor outputs in different measurement scenarios, now, for determining a target sensor output $t_{t0}(Q_{tot})$ which is equivalent to the first and the second sensor outputs $t_{b1}(Q_{by})$, $t_{t1}(Q_{tot})$ which were used for determining the ratio $r_1(Q_{tot})$ between flows at sealed and unsealed scenarios under supply of the reference fluid, a target flow - in Figure 7b) denoted at $Q_4$ - will be determined resulting in such target sensor output $t_{t0}(Q_{tot}=Q_4)$. Such target flow $Q_4$ is derived from a known flow $Q_3$ resulting in a third sensor output $t_{b0}(Q_{by}=Q_3)$ being equal to the first and the second sensor output $t_{b1}(Q_{by}=Q_1) = t_{t1}(Q_{tot}=Q_2)$ by applying the adjusted ratio $r_0(Q_{tot})$ to such flow $Q_3$.

In a more formal way, the target sensor output $t_{t0}(Q_{tot})$ is given by:

$$t_{t0}(Q_{tot}) = t_{b0}[Q_{tot}/r_0(Q_{tot})] \qquad (6)$$

wherein $t_{b0}(Q_{by})$ denotes the third sensor output when applying the target fluid at sealed main path. In the subject notation, for the sensor output t the indices "b" and "0" denote the scenario "flow through bypass only" and "target fluid" respectively, and for the sensor output t the index "t" and "0" denote the scenario "total flow through bypass and main path" and "target fluid" respectively.

In other words, during the calibration process, the following relations are determined:

  a) The dependence of the ratio $r_1(Q_{tot})$ of Equation (1) from the total flow $Q_{tot}$ for the reference fluid. This dependence is determined from the measurements under the first and the second scenario.
  b) The dependence of the sensor signal $t_{b0}(Q_{by})$ from the flow $Q_{by}$ in the bypass. This dependence is determined from the measurements under the third scenario.

In addition, the knowledge of the constant c of Equation (5) allows to determine the ratio $r_0(Q_{tot})$ for the target fluid from the knowledge of the ratio $r_1(Q_{tot})$ for the reference fluid. This, in turn, allows to determine the relation between the total flow $Q_{tot}$ of target fluid and the sensor signal $t_{t0}(Q_{tot})$ as described in Equation (6).

Hence, the description of the relation of Equation (6) is basically the result of the calibration process. In normal operation of the flow sensor arrangement after calibration, $t_{t0}$ is measured and $Q_{tot}$ has to be derived therefrom. This can be achieved by using the inverse of Equation (6).

Hence, advantageously, the inverse of Equation (6) is stored as calibration data, e.g. in the flow sensor arrangement itself. This inverse describes the dependence of the flow $Q_{tot}$ of the target fluid as a function of the sensor signal $t_{t0}$. It can e.g. be stored in a look-up table in a memory of the flow sensor arrangement.

The steps of the calibration method, and in particular, the steps for measuring the sensor output in different scenarios including flows through the bypass only or flows simultaneously through the bypass and the main path may advantageously be implemented in an automated fashion such that a control unit controls the exposure of the flow sensor arrangement to known or even predetermined flows of the reference or the target fluid respectively, receives the sensor output, and assigns the sensor output to the known flow loaded into the flow sensor arrangement. Additionally, the sensor output may be recorded including the assigned flows. For achieving a further degree in automation, the control unit may automatically insert or remove the plug when needed. This requires suitable mechanics and bearings for the plug. However, also the computation of the target sensor output may be implemented in an automated fashion.

In general, a control unit for implementing parts of the entire routine for calibrating a flow sensor may even be implemented on the flow sensor chip itself. Alternatively, such control unit may be implemented as a unit different to the flow sensor chip and be connected to the flow sensor chip and - if needed - to the plug by suitable means. Still, in such scenario, the target sensor output and possibly any parameters for determining such output may be stored on the flow sensor chip, for allowing accessing to this information during operation.

In the above embodiments, the measurements of the first and the third scenarios were carried out by inserting the plug 4 into the common component 5, thereby closing the main path. Alternatively, the extension 51 including at least a section of the bypass 2 can be designed to be releasable from the common component 5 such that a known flow of fluid can be directly fed into the bypass, thereby eliminating the need for blocking the main path.

The reference fluid typically is a fluid different from the target fluid. For, example, the reference fluid may be air or nitrogen. The target fluid may be domestic gas, for example.

Reference list

| | |
|---|---|
| 1 | Main path |
| 11 | Flow resistance |
| 111 | Pipe |
| 2 | Bypass |
| 21 | Inlet |
| 22 | Seal |
| 3 | Flow sensor |
| 4 | Plug |
| 41 | Supply |
| 411 | Outlet |
| 42 | Seal ring |
| 5 | Common Component |
| 51 | Extension |

**Claims**

1. Method for calibrating a flow sensor, in an arrangement comprising a main path for a target fluid to flow through, and a bypass for bypassing the main path, the flow sensor being arranged at the bypass, wherein:

   a first sensor output ($t_{b1}(Q_{by})$) is received when applying a reference fluid to the bypass (2),
   a second sensor output ($t_{t1}(Q_{tot})$) is received when applying the reference fluid to the main path (1) and the bypass (2),
   a third sensor output ($t_{b0}(Q_{by})$) is received when applying the target fluid to the bypass (2), and
   a target sensor output ($t_{t0}(Q_{tot})$) is determined for the target fluid supplied to the main path (1) and the bypass (2) subject to the received sensor outputs ($t_{b1}(Q_{by})$, $t_{t1}(Q_{tot})$, $t_{b0}(Q_{by})$).

2. Method according to claim 1, wherein each sensor output is received and recorded for different known flows of the respective fluid.

3. Method according to claim 1 or claim 2, wherein for the reference fluid a reference fluid ratio $r_1(Q_{tot}) = Q_{tot}/Q_{by}$ is determined from the first and the second sensor output ($t_{b1}(Q_{by})$, $t_{t1}(Q_{tot})$), with $Q_{tot}$ being a total flow through the main path (1) and the bypass (2), and ($Q_{by}$) being a flow through the bypass (2), and
   wherein for the target fluid a target fluid ratio $r_0(Q_{tot}) = Q_{tot}/Q_{by}$ is determined according to $r_0(Q_{tot}) = r_1(c*Q_{tot})$ wherein c is a constant.

4. Method according to claim 3, wherein the reference fluid ratio is determined from

$$r_1(Q_{tot}) = Q_{tot}/\{t^{-1}_{b1}[t_{t1}(Q_{tot})]\}$$

wherein

- $t_{b1}(Q_{by})$ denotes the first sensor output when applying the reference fluid to the bypass (2),
- $t^{-1}_{b1}$ denotes the inverse function of $t_{b1}(Q_{by})$, and
- $t_{t1}(Q_{tot})$ denotes the second sensor output when applying the reference fluid to the main path (1) and the bypass (2).

5. Method according to claim 4, wherein the target sensor output ($t_{t0}(Q_{tot})$) is determined according to

$$t_{t0}(Q_{tot}) = t_{b0}[Q_{tot}/r_0(Q_{tot})]$$

wherein
$t_{b0}(Q_{by})$ denotes the third sensor output when applying the target fluid to the bypass (2).

6. Method according to any one of the preceding claims, wherein a reference fluid ratio ($r_1(Q_{tot})$) is determined between flows ($Q_{by}$, $Q_{tot}$) resulting in equivalent first and second sensor outputs ($t_{b1}(Q_{by})$, $t_{t1}(Q_{tot})$).

7. Method according to claim 6, wherein the reference fluid ratio ($r_1(Q_{tot})$) is adjusted by a term accountable for the reference fluid being a fluid different to the target fluid.

8. Method according to claim 7, wherein a target flow ($Q_{tot}$) is determined resulting in a target sensor output ($t_{b0}(Q_{by})$) being equivalent to the first and the second sensor output ($t_{b1}(Q_{by})$, $t_{t1}(Q_{tot})$) by applying the adjusted reference fluid ratio ($r_0(Q_{tot})$) to a flow ($Q_{by}$) resulting in a third sensor output ($t_{b0}(Q_{by})$) equivalent to the first and the second sensor output ($t_{b1}(Q_{by})$, $t_{t1}(Q_{tot})$).

**Patentansprüche**

1. Verfahren zur Kalibrierung eines Durchflusssensors, in einer Anordnung umfassend einen Hauptpfad zum Durchfliessen eines Zielfluids, und einen Bypass zur Umgehung des Hauptpfads, wobei der Durchflusssensor am Bypass angeordnet ist, wobei:

ein erstes Sensorausgangssignal ($t_{b1}(Q_{by})$) empfangen wird, wenn ein Referenzfluid in den Bypass (2) gegeben wird,
ein zweites Sensorausgangssignal ($t_{t1}(Q_{tot})$) empfangen wird, wenn das Referenzfluid in den Hauptpfad (1) und den Bypass (2) gegeben wird,
ein drittes Sensorausgangssignal ($t_{b0}(Q_{by})$) empfangen wird, wenn das Zielfluid in den Bypass (2) gegeben wird, und
ein Zielausgangssignal ($t_{t0}(Q_{tot})$) für das dem Hauptpfad (1) und dem Bypass (2) zugeführte Zielfluid, abhängig von den empfangenen Sensorausgangssignalen ($t_{b1}(Q_{by})$, $t_{t1}(Q_{tot})$, $t_{b0}(Q_{by})$), bestimmt wird.

2. Verfahren nach Anspruch 1, wobei jedes Sensorausgangssignal für verschiedene bekannte Durchflüsse des jeweiligen Fluids empfangen und aufgenommen wird.

3. Verfahren nach Anspruch 1 oder Anspruch 2, wobei für das Referenzfluid ein Referenzfluidverhältnis $r_1(Q_{tot}) = Q_{tot}/Q_{by}$ aus dem ersten und dem zweiten Sensorausgangssignal ($t_{b1}(Q_{by})$, $t_{t1}(Q_{tot})$) bestimmt wird, wobei $Q_{tot}$ ein Gesamtdurchfluss durch den Hauptpfad (1) und dem Bypass (2) ist, und
wobei für das Zielfluid ein Zielfluidverhältnis $r_0(Q_{tot}) = Q_{tot}/Q_{by}$ gemäss $r_0(Q_{tot}) = r_1(c*Q_{tot})$ bestimmt wird, wobei c eine Konstante ist.

**4.** Verfahren nach Anspruch 3, wobei das Referenzfluidverhältnis aus

$$r_1(Q_{tot}) = Q_{tot}/\{t^{-1}_{b1}[t_{t1}(Q_{tot})]\}$$

bestimmt wird, wobei

- $t_{b1}(Q_{by})$ das erste Sensorausgangssignal bei Zugabe des Referenzfluids in den Bypass (2) ist,
- $t^{-1}_{b1}$ die inverse Funktion von $t_{b1}(Q_{by})$ ist, und
- $t_{t1}(Q_{tot})$ das zweite Sensorausgangssignal bei Zugabe des Referenzfluids in den Hauptpfad (1) und den Bypass (2) ist.

**5.** Verfahren nach Anspruch 4, wobei das Zielausgangssignal ($t_{t0}(Q_{tot})$) gemäss

$$t_{t0}(Q_{tot}) = t_{b0}[Q_{tot}/r_0(Q_{tot})]$$

bestimmt wird, wobei
$t_{b0}(Q_{by})$ das dritte Sensorausgangssignal bei Zugabe des Zielfluids in den Bypass (2) ist.

**6.** Verfahren nach einem der vorangehenden Ansprüche, wobei ein Referenzfluidverhältnis ($r_1(Q_{tot})$) zwischen Durchflüssen ($Q_{by}$, $Q_{tot}$) bestimmt wird und äquivalente erste und zweite Sensorausgangssignale ($t_{b1}(Q_{by})$, $t_{t1}(Q_{tot})$) ergibt.

**7.** Verfahren nach Anspruch 6, wobei das Referenzfluidverhältnis ($r_1(Q_{tot})$) mittels eines Terms eingestellt wird, der für ein vom Zielfluid verschiedenes Referenzfluid verantwortlich ist.

**8.** Verfahren nach Anspruch 7, wobei ein Zieldurchfluss ($Q_{tot}$) bestimmt wird und in einem Zielsensorausgangssignal ($t_{b0}(Q_{by})$) resultiert, das durch Zugabe des eingestellten Referenzfluidverhältnises ($r_0(Q_{tot})$) zu einem Durchfluss ($Q_{by}$) äquivalent zum ersten und zweiten Sensorausgangssignal ($t_{b1}(Q_{by})$, $t_{t1}(Q_{tot})$) ist und in einem dritten Sensorausgangssignal ($t_{b0}(Q_{by})$) resultiert, das äquivalent zum ersten und zweiten Sensorausgangssignal ($t_{b1}(Q_{by})$, $t_{t1}(Q_{tot})$) ist.

**Revendications**

**1.** Méthode pour calibrer un capteur d'écoulement, dans un arrangement comprenant un chemin principal pour un fluide cible qui passe dedans, et un contournement pour contourner le chemin principal, le capteur d'écoulement étant arrangé au contournement:

un premier signal de sortie du capteur ($t_{b1}(Q_{by})$) étant reçu quand un fluide de référence est fourni au contournement (2),
un deuxième signal de sortie du capteur ($t_{t1}(Q_{tot})$) étant reçu quand le fluide de référence est fourni au chemin principal (1) et au contournement (2),
un troisième signal de sortie du capteur ($t_{b0}(Q_{by})$) étant reçu quand le fluide cible est fourni au contournement (2), et
un signal cible du capteur ($t_{t0}(Q_{tot})$) étant déterminé pour le fluide cible fourni au chemin principal (1) et au contournement (2) DEPENDANT des signaux de capteur reçus ($t_{b1}(Q_{by})$, $t_{t1}(Q_{tot})$, $t_{b0}(Q_{by})$).

**2.** Méthode selon la revendication 1, chaque signal de sortie du capteur étant reçu et enregistré pour des différents écoulements connus du respective fluide.

**3.** Méthode selon la revendication 1 et la revendication 2, un rapport de fluide de référence $r_1(Q_{tot}) = Q_{tot}/Q_{by}$ étant déterminé pour le fluide de référence à partir du premier et du deuxième signal de sortie ($t_{b1}(Q_{by})$, $t_{t1}(Q_{tot})$), $Q_{tot}$ étant un écoulement totale à travers le chemin principal (1) et du contournement (2), et
un rapport de fluide cible $r_0(Q_{tot}) = Q_{tot}/Q_{by}$ étant déterminé pour le fluide cible selon $r_0(Q_{tot}) = r_1(c*Q_{tot})$, c étant une constante.

**4.** Méthode selon la revendication 3, le rapport de fluide de référence étant déterminé à partir de

$$r_1(Q_{tot}) = Q_{tot}/\{t^{-1}{}_{b1}[t_{t1}(Q_{tot})]\}$$

$t_{b1}(Q_{by})$ étant le premier signal de sortie du capteur quand le fluide de référence est fourni au contournement (2),
$t^{-1}{}_{b1}$ étant la fonction inverse de $t_{b1}(Q_{by})$, et
$t_{t1}(Q_{tot})$ étant le deuxième signal de sortie du capteur quand le fluide de référence est fourni au chemin principal (1) et au contournement (2).

**5.** Méthode selon la revendication 4, le signal cible de capteur ($t_{t0}(Q_{tot})$) étant déterminé selon

$$t_{t0}(Q_{tot}) = t_{b0}[Q_{tot}/r_0(Q_{tot})],$$

$t_{b0}(Q_{by})$ étant le troisième signal de sortie du capteur quand le fluide cible est fourni au contournement (2).

**6.** Méthode selon l'une des revendications précédentes, un rapport de fluide de référence ($r_1(Q_{tot})$) étant déterminé entre des écoulements ($Q_{by}$, $Q_{tot}$), résultant en des équivalents premiers et de deuxièmes signaux de sortie du capteur ($t_{b1}(Q_{by})$, $t_{t1}(Q_{tot})$).

**7.** Méthode selon la revendication 6, le rapport de fluide de référence ($r_1(Q_{tot})$) étant ajusté par un terme responsable pour le fluide de référence qui est un fluide différent du fluide cible.

**8.** Méthode selon la revendication 7, un écoulement cible ($Q_{tot}$) étant déterminé résultant en un signal cible de sortie du capteur ($t_{b0}(Q_{by})$) étant équivalent au premier et au deuxième signal de sortie du capteur ($t_{b1}(Q_{by})$, $t_{t1}(Q_{tot})$ en appliquant le rapport de fluide de référence ajusté ($r_0(Q_{tot})$) à un écoulement ($Q_{by}$) résultant en un troisième signal de sortie du capteur ($t_{b0}(Q_{by})$) équivalent au premier et au deuxième signal de sortie de capteur ($t_{b1}(Q_{by})$, $t_{t1}(Q_{tot})$).

## FIG. 1

## FIG. 2

FIG. 3

FIG. 4

FIG. 5

FIG. 6

FIG. 7

a)

b)

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004088256 A2
- EP 0834723 A1
- US 3492856 A
- EP 1840535 A1